# EUROPEAN PATENT APPLICATION

(11) **EP 1 350 961 A2**
(43) Date of publication of application: **08.10.2003**
(21) Application number: 02016879.5
(22) Date of filing: 30.07.2002
(51) Int. Cl.: F15B 20/00, F15B 13/04

(54) **Double activate controls hydraulic valve with locking trigger**

(30) Priority: 05.04.2002 CN 02105491
(71) Applicant: Lawn & Garden Products (Laizhou), Shandong 261428 (CN)
(72) Inventor: Feng, Ruiting, Qingdao City Shandong Province 266071 (CN)
(74) Representative: Reinhard - Skuhra - Weise & Partner

(57) **Abstract**

One kind of double activate controls hydraulic valve with locking trigger, which can realize hydraulic controls according to the oil pump's on/off states and operations of the control lever. It mainly consists of control lever assembly and valve body. The control lever of the invention cannot be operated with other parts of the body except the hand. During the application of the invention, when the oil pump is running but the control lever (2) is not pressed, the connecting hole (C) to hydraulic cylinder is blocked but the connecting hole (D) to the oil tank is opened. The connection between the hydraulic cylinder and the oil pump outlet (B)/oil tank (A) is disengaged while the oil pump outlet (B) is connected with the oil tank. When the oil pump is running and the control lever is pressed, the connecting hole to the hydraulic cylinder (C) is opened but the connecting hole (D) to oil tank is blocked. The connection between the hydraulic cylinder and the oil pump outlet is engaged while the hydraulic cylinder/oil pump outlet is separated from the oil tank. When the oil pump stops running but the control lever (2) is pressed, all the connecting holes between the hydraulic cylinder and the oil tank are blocked.

## Description

### Technical field

The present invention relates to the protection device for the splitting process, and more particularly relates to a device protecting operator while using the wood splitter including small size and home- use splitter.

### Technical Background

For the machines with potential hazards, "two - hand simultaneous operation" device is always required to prevent the operator from accidentally putting hands or arms in the working area that invites injury during the operations of the machine.

The new European standard issued in 1999 puts forward new requirements for the "Log splitters" control and protection (European Standard EN 609-1: Agricultural and Forestry Machinery - Safety of Log Splitters - Part 1: Wedge Splitters, 4.6 Guarding of the Splitting Zone):
b) Layout of the manual controls so that the operator cannot be caught between the pressure plate and the splitting wedge, or between the log and splitting wedge, the pressure plate or other parts of the machine. This requirement is satisfied by using two-hand controls (see EN 574; 1996, 9.1 to 9.4 and 9.6) which conform to all of the following.
   - the two-hand controls should be of the "hold-to run" type, i.e. the splitting process is stopped if either manual control is released and
   - the wedge / pressure plate shall not return to the starting position if one manual control is in the "On" position and
   - It shall be impossible to start the splitting process inadvertently or to operate both controls simultaneously with one hand or arm or with other parts of the body (see EN 574: 1996, 9.1-9.4 and 9.6).

For example, a log splitter adopting the hydraulic service system under the European Patent Nr. EP0806271 does not meet the new standards. The control lever of the system has no protection device. The operator can use foot or other parts of the body to replace a hand for the operation. So the splitting process may have inadvertent injure to the hand lying idle. At same time, in the control valve system, if the operator releases either of the hands that hold oil pump switch and control lever, the hydraulic oil in the cavity of the cylinder shall drain into the oil tank and the hydraulic cylinder piston / push rod shall immediately drive the pressure plate to return to the starting position of the machine. Neither points conforms the abovementioned European standard.

In general, the hydraulic machines such as medium and large size log splitters etc. can meet abovementioned European standards by adding control elements like electromagnetic valve. But for the hydraulic machines such as small size and home- use log splitters etc, such complicated and expensive control elements cannot be adapted due to the limits of the installation room and cost.

### Contents of invention

The purpose of the invention is to provide a kind of double activate controls hydraulic valve with locking trigger. For the hydraulic valve:
1. The operator can operate it only with hands, and other parts of the body cannot change its working position.
2. When either hand of the operator's leaves the control position, the moving parts on the hydraulic machine will immediately stop.
3. Only when both hands of the operator leave the control positions, the moving parts of the hydraulic machine will return to its starting position.
4. It can be used on small size hydraulic machines which only allow the limited installation room.
5. The manufacture cost is low.

In order to finalize abovementioned purpose, the control valve provided in the invention as defined in claim 1 changes its position according to the oil pump's on / off states and operations of the control lever.

Preferred embodiments are listed in the dependent claims, outlined in the following.

The basic principle may consist of two parts, the control lever assembly and valve body. The control lever assembly includes:

A lever installation base, which is of block shape, being fixed on the hydraulic machine properly. Inside the installation base there is upside-down triangle convex block with a through hole besides it. A cylindrical concave slot and a dog are under the through hole, facing the slope face of the triangle convex block. The lever installation base can be made by holding together two pieces of plates that are of same dimensions and shape. It also can be one complete unit obtained by milling, grinding and drilling etc.

A control lever, which is slightly bent for most comfortable hand holding. On the top end and in the middle of the control lever, there is a through hole respectively which is parallel to each other and of the same direction with the through hole in the installation base. A 3rd through hole is arranged on lower end of level which is vertical relative to the through hole in the installation base and the two through holes in the lever above it.

A trigger, which section is of "U" shape and with a pecker on the top. In the upper corner of its two wings, there is coaxial through hole respectively.
The control lever is inserted between the wings of the trigger. The trigger is fixed on the control lever with a axial pin through the holes on the trigger and the one in middle of the lever. The Lower part of the lever is fixed to one end of a plate spring piece. The other end of the plate spring is arranged between the wings of the trigger to back-move the trigger when the external force drawing the trigger is gone.
The control lever with trigger is connected to the lever installation base by the means of a axial pin through the holes in the control lever and the one in the installation base, so that the control lever can be swiveled around the axial pin within the range limited by the arrangements in the lever installation base.
As the pecker on the trigger is propped by the dog in the installation base while the control lever is propped by the convex block in the installation base, the control lever cannot move either forward or backward. When the trigger is triggered, the control lever can be forwarded for a limited travel.

The valve body includes:

One step shaft, which is in thick, medium and fine sections and has two shaft shoulders. At end of the fine section there is concave slot.

One pressure sensor, which is put around the fine section of the step shaft and a clip is put as the limiter around the fine section slot to limit the movement of the pressure sensor.

One spring, which is put around the fine section of the step shaft to prop the pressure sensor.

One valve sleeve, containing abovementioned step shaft, pressure sensor, clip and spring. The thick section of the step shaft extends out of the valve sleeve.

The thick section of the step shaft which extends out of the valve sleeve is inserted in the cylindrical concave slot in the installation base and its end is propped by the control lever, extending/returning in the valve sleeve by to the movement of the control lever and the spring.

There are 4 holes opened on the valve sleeve. Hole A and hole D are connected to the oil tank of a hydraulic machine; hole B is connected to the oil pump outlet and hole C is connected to the hydraulic cylinder. The corresponding relationship among abovementioned holes' locations and sections of the step shaft is described as below: when the control lever is pressed, thick section of the step shaft blocks hole A and at this time, the pressure sensor blocks hole C.

According to above basic principle, the valve body also can be consisted of:

Two valve bodies which are installed parallel to each other, i.e. upper valve body and lower valve body.

In the upper valve body, a back-moving spring and a step shaft are arranged. The spring props the top end of the step shaft. The step shaft is of dumbbell shape which has 2 thick section on the top and in the middle. Hole A connects to oil tank, hole C1 and hole C2 connect to the hydraulic cylinder. The corresponding relationship among holes' locations and the sections of the step shaft is that: when the control lever is not pressed down, the step shaft is propped by the back-moving spring, and the thick section on the top end of the step shaft blocks hole C1 while the middle thick section of the step shaft blocks the opening of the valve body. When the step shaft is pressed by the control lever, the middle thick section of the step shaft blocks hole A and the thick section on the top end blocks hole C2.

In the lower valve body, a spring, a limiter and a pressure sensor are arranged. The spring is set in the limiter and props the pressure sensor. When the oil pump does not run, the pressure sensor is propped by the spring to block the outlet B on the end of valve body which connects the oil pump. When the oil pump is running, the pressure sensor is pushed back by hydraulic oil to reach the limiter.

There are two pipes A and B connecting the upper valve body to the lower valve body. One end of Pipe A locates between hole A and hole C1 in the upper valve body, while the other end locates at end port of the lower valve body. One end of Pipe B locates at hole C2 in the upper valve body and the other end locates at the inner end of the lower valve body and is behind the limiter.

During the application,
(1) When the oil pump is running but the control lever is not pressed, the connecting hole to hydraulic cylinder is blocked but the connecting hole to the oil tank is opened. The connection between the hydraulic cylinder and the oil pump outlet / oil tank is disengaged while the oil pump outlet is connected with the oil tank.
(2) When the oil pump is running and the control lever is pressed, the connecting hole to the hydraulic cylinder is opened but the connecting hole to oil tank is blocked. The connection between the hydraulic cylinder and the oil pump outlet is engaged while the hydraulic cylinder/oil pump outlet is separated from the oil tank.
(3) When the oil pump stops running but the control lever is pressed, all the connecting holes between the hydraulic cylinder and the oil tank are blocked. The hydraulic cylinder, the oil pump outlet and the oil tank are all separated from each other..
(4) When the oil pump stops running and the control lever is not pressed, the connecting holes between the hydraulic cylinder and the oil tank are opened. The hydraulic cylinder communicates with the oil tank.

### Description of the attached Figs

Fig. 1 is basic schematic assembly and disassembly Fig. of the control valve of the invention.
Fig. 2 is sketch Fig. of the basic schematic assembly of the control valve of the invention.
Fig. 3 is the operation schematic sketch of the invention in stand-by state with oil circulating between oil pump and oil tank.
Fig.4 is the operation schematic sketch of the invention in working state with oil being injected into hydraulic cylinder.
Fig.5 is the operation schematic sketch of the invention in freeze state with oil being sealed in the hydraulic cylinder by the operation of control lever.
Fig.6 is the operation schematic sketch of the invention in stand-by state with oil being sealed in the hydraulic cylinder by the oil pump's running.
Fig.7 is the operation schematic sketch of the invention in stop state with oil draining from the hydraulic cylinder to the oil tank.
Fig. 8 is assembly sketch of control valve described in the embodiment.
Fig.9 is the operation schematic sketch of the control valve described in the embodiment in stand-by state with oil circulating between oil pump and oil tank.
Fig.10 is the operation schematic sketch of the control valve described in embodiment in working state with oil being injected into hydraulic cylinder.
Fig.11 is the operation schematic sketch of the control valve described in embodiment in freeze state with oil being sealed in the hydraulic cylinder by the operation of the control lever.
Fig.12 is the operation schematic sketch of control valve described in the embodiment in stand-by state with oil being sealed in the hydraulic cylinder by the oil pump's running.
Fig.13 is the operation schematic sketch of control valve described in the embodiment in stop state with oil draining from the hydraulic cylinder to oil tank.
Fig. 14 is the vertical sketch of a log splitter in which the invention is adopted.

### Embodiments of the invention

Embodiment # 1 is used to describe the basic technical principle of the invention first; To convenience the description, the simpler straight line control valve is taken by the embodiment as an example. Though the embodiment only describes the basic technical principle of the invention, the described control valve can be used directly on a log splitter that only allows long but narrow installation room for the control valve.

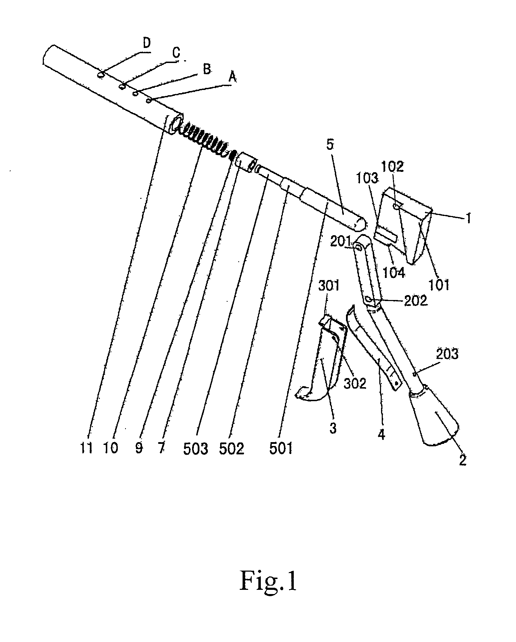

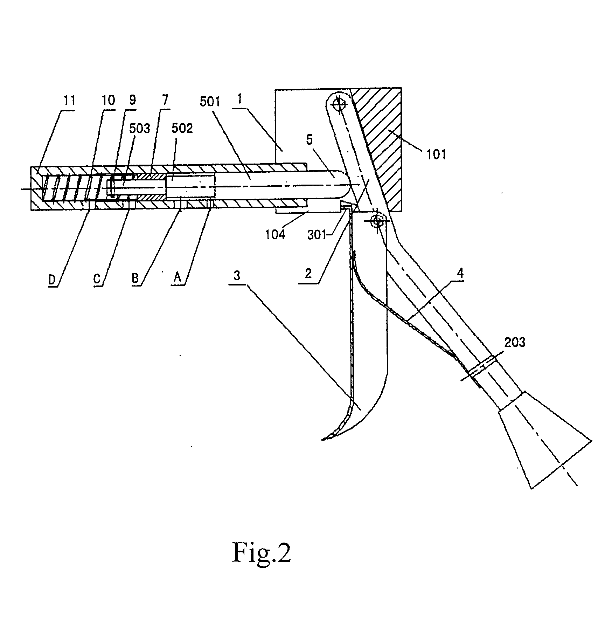

With reference to Fig.1 and Fig 2, the linear control valve provided by the embodiment is fixed on a hydraulic log splitter through lever installation base 1. The installation base 1 is of block shape and is processed from two identical pieces of plates of same dimensions and shape that are obtained thru same machining process. The details is described below: upside down triangle convex block 101 is on one side with through hole 102 beside it. A cylindrical concave slot 103 and a dog 104 are under the through hole 102, facing the slope edge of triangle convex block 101.

One control lever 2, which is slightly bent for most comfortable hand holding. There are 3 through holes 201, 202 and 203 arranged in the lever. The upper hole 201 and the middle one 202 are parallel to the hole 102 in the installation base. The lower through hole 203 is vertical to holes 201, 202 & 102.

One trigger 3, which section is of "U" shape with a pecker 301 on the top. In the upper corner of its 2 wings, there is a coaxial through hole 302 respectively.

The control lever 2 is inserted between the wings of the trigger 3. The trigger 3 is fixed on the control lever 2 with a axial pin through the middle through hole 202 in the lever and through holes 302 in the trigger wings. The lower part of the lever 2 is fixed to one end of a plate spring piece 4 through the through hole 203. The other end of the plate spring 4 is arranged between the wings of the trigger 3 to back-move the trigger 3 when the external force drawing the trigger 3 is gone.

The control lever 2 with trigger 3 is connected to the lever installation base 1 by the means of a axial pin through the holes 201 & 102 in the control lever 2 and the control lever installation base 1, so that the control lever 2 can be swiveled around the axial pin within the range limited by the arrangements in the lever installation base 1.
As the pecker 301 on the trigger is propped by the dog 104 in the installation base 1 while the control lever 2 is propped by the convex block 101 in the installation base 1, the control lever 2 cannot move either forward or backward. When the trigger 3 is triggered, the control lever 2 can be forwarded for a limited travel.

The valve body includes:

A step shaft 5 which is in thick, medium and fine sections 501, 502 and 503 and has two shaft shoulders, the end face of the thick section 501 is semi spherical to fit control handle 2 well.

One pressure sensor 7, which is put around the fine section 503 of the step shaft 5 and a limiter 9 clipped on concave slot of the fine section 503 to limit the position of the pressure sensor 7.

One spring 10, which is put around the fine section 503 of the step shaft 5 to prop the end face of the pressure sensor 7.

One valve sleeve 11, containing abovementioned step shaft 5, pressure sensor 7, limiter 9 and spring 10. The thick section 501 of the step shaft 5 extends out of the valve sleeve 11.

The thick section of the step shaft 501 which extends out of the valve sleeve 11 is inserted in the cylindrical concave slot 103 on the installation base 1 and its end is propped by the control lever 2, extending/returning in the valve sleeve 11 by the movement of the control lever 2 and spring 10.

There are 4 oil holes opened in the valve sleeve 11. To convenience the description, indication numbers A, B, C and D are used on the holes. Hole A and hole D are connected to the oil tank of a hydraulic machine, hole B is connected to the oil pump outlet and hole C is connected to the hydraulic cylinder. The corresponding relationship among above-mentioned holes' locations and the sections 501, 502 and 503 of the step shaft 5 is described as below : when the control lever 2 is pressed, thick section 501 of the step shaft 5 blocks hole A and at this time, the pressure sensor 7 blocks hole C.

As the hydraulic devices and the components of oil tank, oil pump and hydraulic cylinder etc. are well-understood by the public, no further information or figs on them is recommended herein.

The working principles of the control valve under different activating conditions are described as follows.

### State 1: Stand-by state with oil circulating between the oil pump and oil cylinder

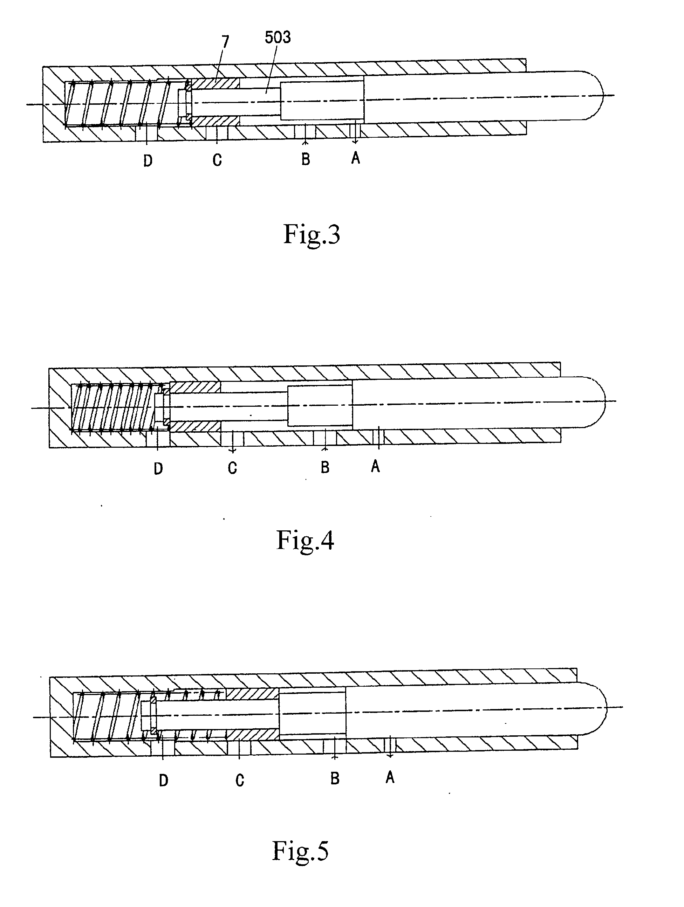

When the oil pump of the hydraulic machine is running but the control lever is not pressed, the high pressure oil enters the control valve through the hole B in the valve sleeve and returns to the oil tank through the smaller discharge hole A. The diameter difference between hole B and hole A results in oil discharge pressure inside the sleeve which pushes the pressure sensor to compress the spring and move toward the limiter till it is propped and stopped by the limiter. In this new position, the pressure sensor on the step shaft just blocks hole C which connects hydraulic cylinder of the machine. As no hydraulic oil enters into the hydraulic cylinder, the machine does not work but in a stand-by state with motor's running. The situation of the control valve under this state is shown by Fig.3.

### State 2: Working state with oil being injected into the hydraulic cylinder

When the oil pump of the machine is running and the control lever is pressed, the step shaft will go further toward the spring and compress it. The thick section of the step shaft blocks hole A which connects to oil tank. The high pressure oil which is pumped into the valve thru hole B goes through hole C to enter the hydraulic cylinder. The machine then starts to work. The situation of the control valve under this state is shown by Fig.4.

### State 3: Freeze state with oil being sealed in the hydraulic cylinder by the operation of control lever

When the hydraulic machine is working, once the oil pump suddenly stops running but the control lever is not released, the oil discharge pressure which pushes the pressure sensor against the spring is gone, and the compressed spring forces the pressure sensor to move towards the middle section of the step shaft till the sensor reaches the shaft shoulder of the middle section on the step shaft. In this new location, the pressure sensor just blocks hole C which connects hydraulic cylinder. The oil in the hydraulic cylinder is sealed inside. The back-moving device on the machine can not discharge the oil inside the hydraulic cylinder. And the machine cannot return to the starting position (the moving parts freeze). The situation of the control valve under this state is shown by Fig.5.

### State 4: Stand-by state with oil being sealed in the hydraulic cylinder by the oil pump's running

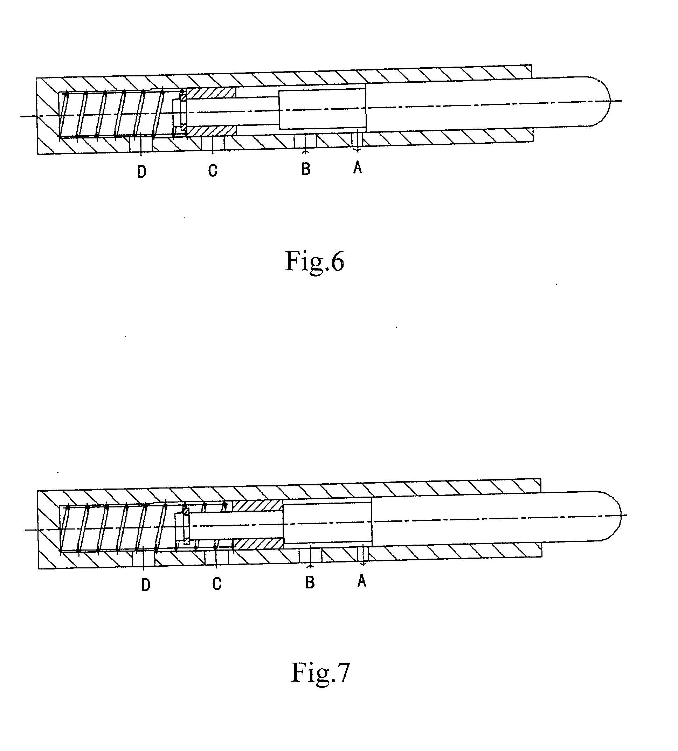

When the hydraulic machine is working, once the control lever is released but the oil pump is still running, the compressed spring pushes the pressure sensor and the step shaft, forcing the control lever to return to the starting position. Once the step shaft reaches its starting position. The plate spring pushes the trigger to lock the control lever down. Hole A is therefore opened to allow the high pressure oil drain into the oil tank. The oil discharge pressure continuously keeps the pressure sensor compressing the spring to reach the limiter. In this position, the pressure sensor blocks the hole C connecting to the hydraulic cylinder to seal the oil in it. The back- moving device in the machine can not discharge the oil inside the hydraulic cylinder. And the machine can not return to the starting position (the moving parts freeze), The situation of the control valve under this state is shown by Fig.6.

### State 5: Stop state with oil draining from the hydraulic cylinder to the oil tank

When the oil pump of the hydraulic machine stops and control lever is released, the compressed spring pushes the pressure sensor to move towards the middle section of the step shaft and is stopped by the shaft shoulder of the middle section of the step shaft. In this position, the pressure sensor just opens hole C connecting to the hydraulic cylinder. The compressed spring pushes the pressure sensor further to move step shaft and the control lever to the starting position. The plate spring pushes the trigger to lock the control lever down. The back-moving device in the machine drains the hydraulic oil in the hydraulic cylinder through hole C and hole D into the oil tank . And the machine returns to its starting position. The situation of the control valve under this state is shown by Fig.7.

Embodiment # 2 - Some portable hydraulic log splitters always require the control valves to be installed inside the end cover which plugs in the ends of rectangular section oil tank and the round section hydraulic cylinder at same time. For such log splitters, the hydraulic cylinder is usually arranged in the oil tank cavity to reduce the overall dimensions of the machine. The width of the end cover on the smallest portable splitter is less than 70mm, but the diameters of the oil inlets and outlets in such narrow cover are always required to be no less than 10mm to ensure enough oil supply and fast oil discharge. According to the basic principle described in the invention content and embodiment 1, with some equal changes, Embodiment # 2 is ready to meet these requirements.

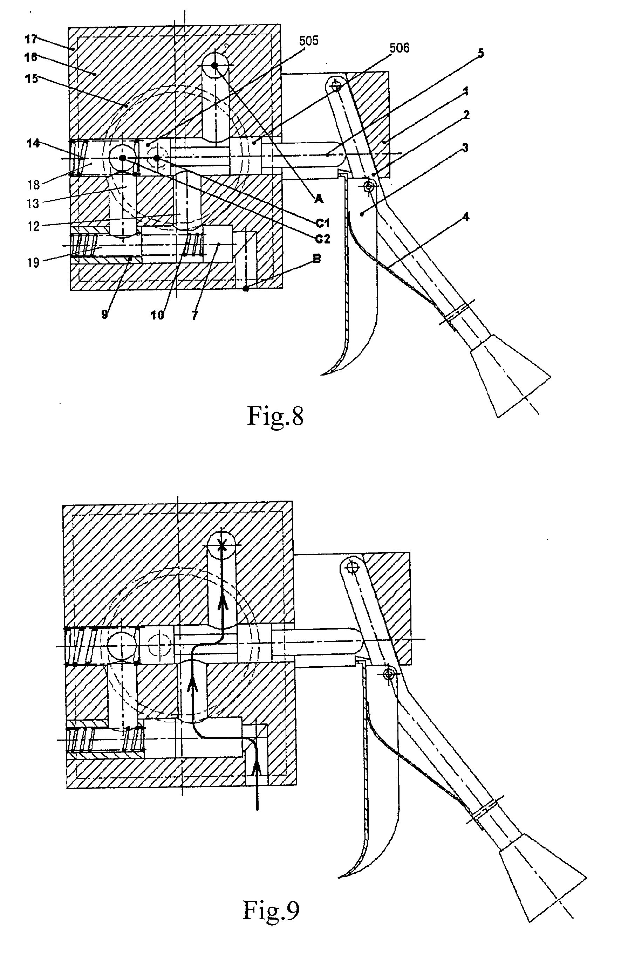

With reference to fig.8, no change is made on the control lever assembly but two parallel valve bodies are adapted, i.e. upper valve body 18 and lower valve body 19. In the upper valve body 18, reset spring 14 and step shaft 5 are arranged. The reset spring 14 props the top end of the step shaft 5. The medium section 504 of the step shaft 5 is of thinner diameter while the diameter of the top end 505 and the middle part 506 are larger. Such arrangements makes the step shaft look like a dumbbell. The corresponding relationship among the step shaft 5 and the locations of hole A which connects oil tank, hole C1 and C2 which connect the hydraulic cylinder is described as below: when the control lever 2 is not pressed down, the step shaft 5 is propped by the reset spring 14. The thick section 505 on the top end of the step shaft 5 blocks hole C1 and the thick section 506 in the middle of the step shaft 5 seals the opening of the valve body 18. When the step shaft 5 is pushed forward by the control lever 2, the thick section 506 in the middle of the step shaft 5 blocks hole A and the thick section 505 on the top end blocks hole C2.

In the lower valve body 19, there are a spring 10, a limiter 9 and a pressure sensor 7. The spring 10 props the pressure sensor 7. When the oil pump does not run, no oil pressure on the pressure sensor is provided. The pressure sensor 7 is propped by the spring 10 to block the oil outlet connecting to the oil pump in the lower valve body 19. Once the oil pump is running, the sensor 7 is pushed backwards by the hydraulic oil to reach the limiter 9.

There are two connecting pipes arranged between the upper valve body 18 and the lower valve body 19. To convenience the description, they are mentioned as pipe A with a reference # 12 and pipe B with a reference # 13 respectively. One end of Pipe A with reference # 12 locates between hole A and hole C1 in the upper valve body 18 and the other end of it locates at end opening of the lower valve body 19. One end of Pipe B with reference # 13 locates at hole C2 in the upper valve body 18 and the other end of it locates at the inner end of the lower valve body 19 and is behind the limiter 9.

The working principle of the control valve in the embodiment # 2 under different activating conditions are described as follows:

### State 1: Stand-by state with oil circulating between oil pump and oil tank

When the oil pump in the hydraulic machine is running but the control lever is not pressed, the high pressure hydraulic oil from the oil outlet pushes the pressure sensor to go backwards to reach the limiter. Pipe B with reference # 13 is therefore blocked. The high pressure oil routes to the oil tank along pipe A, upper valve body and hole A. At this time, being propped by the reset spring, the thick section on the top end of the step shaft blocks hole C1 which connects the hydraulic cylinder. With no hydraulic oil going into the hydraulic cylinder, The machine does not start to work. The situation of the control valve under this state is shown by Fig.9 (the arrow in the Fig. shows the direction of the oil flow).

### State 2: Working State with oil being injected into hydraulic cylinder

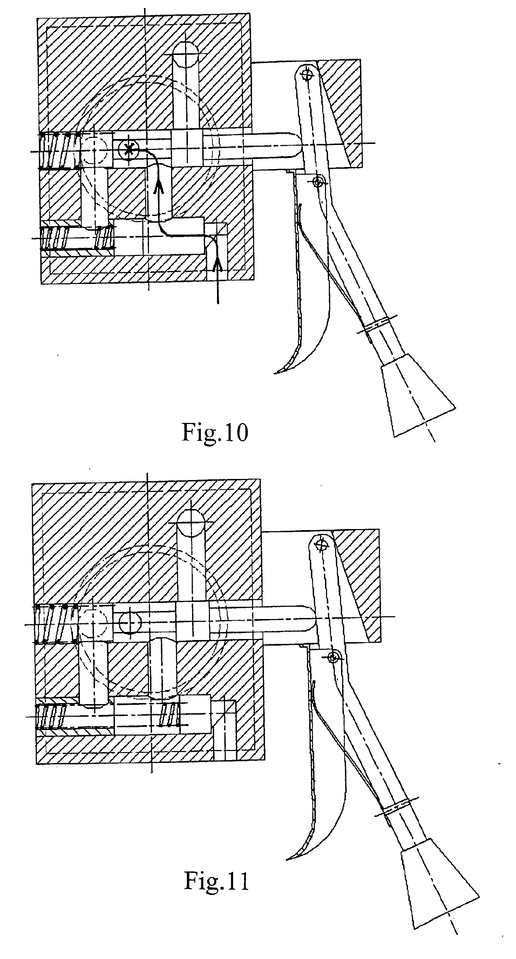

When the oil pump of the hydraulic machine is running and the control handle is pressed, the step shaft in the upper valve body moves towards the reset spring and compress it. The thick section in middle of the step shaft blocks hole A which connects the oil tank. The other thick section on its top end blocks hole C2 which connects the hydraulic cylinder. The high pressure oil pumped into the control valve from hole B enters into the hydraulic cylinder through hole C1 and the machine starts to work. The position of the pressure sensor in the lower valve body is as same as described in state 1. The situation of the control valve under this state is shown by Fig.10.

### State 3: freeze state with oil being sealed in the hydraulic cylinder by the operation of the control lever.

When the hydraulic machine is working, once the oil pump suddenly stops running but the control lever is not released, the compressed spring in the lower valve body will push the pressure sensor to move towards hole B to block hole B & pipe A. The hydraulic oil in the hydraulic cylinder is sealed inside. The back-moving device in the machine can not discharge the oil inside the hydraulic cylinder. And the machine can not return to its starting position (moving parts freeze) The situation of the control valve under this state is shown by Fig.11. As there is no oil flow at this time, no indication arrow appears in the Fig.

### State 4: Stand-by state with oil being sealed in the hydraulic cylinder by the oil pumps running

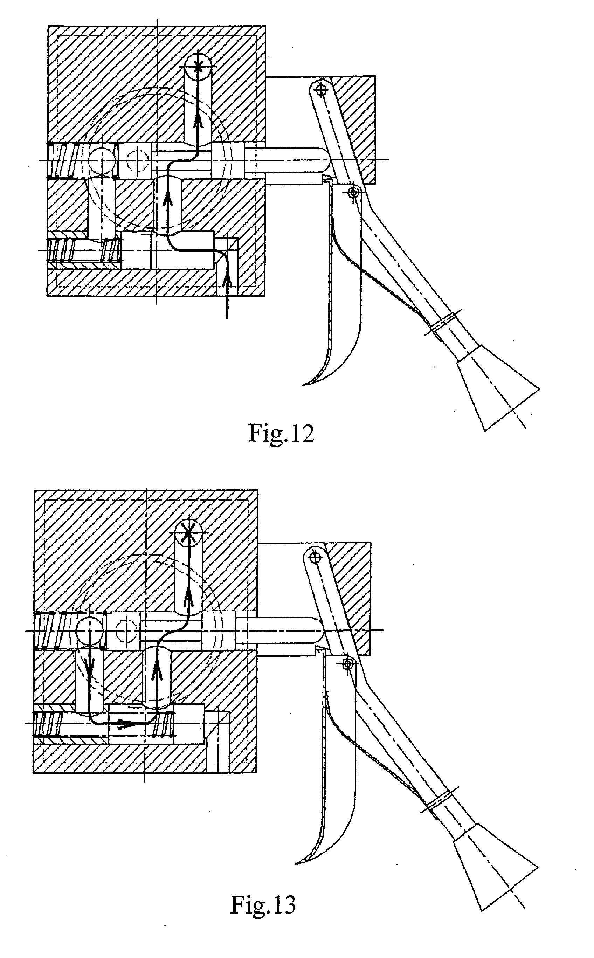

When the hydraulic machine is working, once the control lever is suddenly released but the oil pump is still running, the reset spring in the upper valve body pushes the step shaft backward to open hole A which connects the oil tank and blocks hole C1. Then the plate spring on the control lever pushes the trigger to lock down the control lever. The hydraulic oil pumped from hole B directly returns to the oil tank through the hole A. The hydraulic oil in the hydraulic cylinder is sealed inside by the thick section on the top end of the step shaft. The back-moving device in the machine can not discharge the oil inside the hydraulic cylinder. And the machine can not return to its starting position (moving parts freezes). The situation of the control valve under this state is show by Fig.12.

### State 5: Stop state with oil draining from the hydraulic cylinder to oil tank

When the oil pump in the hydraulic machine stops and control lever is released, the spring in the lower valve body pushes the pressure sensor to move towards hole B of the lower valve body to block it. The reset spring in the upper valve body pushes the step shaft to return to its starting position. Then the plate spring pushes the trigger to lock the control lever down. The back-moving device in the machine force the oil in the hydraulic cylinder to go out thru hole C2, and the discharged oil routes along pipe B, lower valve body, pipe A and upper valve body to return to the oil tank through hole A. The machine returns to its starting position. The situation of the control valve under this state is shown by Fig.13.

As described above, the control lever on the control valve provided by the invention cannot be pressed when the trigger is not triggered. This design ensures no other part of the body can replace a hand to operate this hand control.

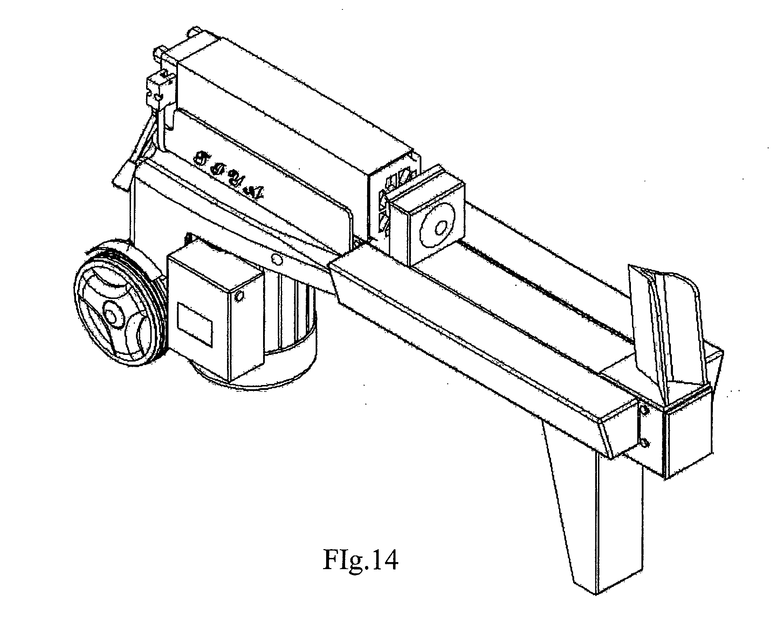

The structure of the above control valve is compact. The dimension of the parts in the control valve can be changed without affecting the function to match different size machines. It is characterized with simple parts machining and low manufacture cost and is very suitable for the control on the small size hydraulic machine. The Fig. 14 is a vertical sketch of the hydraulic machine on which the present control valve is adopted.

## Claims

1. Double activate controls hydraulic valve with locking trigger, which realize hydraulic controls according to the oil pump's on / off states and operations of the control lever.

2. Control valve according to claim 1, wherein the basic principle consists of control lever assembly and valve body, of which the control lever assembly includes;
A lever control installation base, which is of block shape, being fixed on the hydraulic machine properly. Inside the installation base, there is upside-down triangle convex block with a through hole besides it. A cylindrical concave slot and a dog are under the through hole, facing the slope face of the triangle convex block.
A control handle, which is slightly bent for most comfortable hand holding. On the top end and in the middle of the control lever, there is a through hole respectively which is parallel to each other and of the same direction with the through hole in the installation base.
A trigger, which section is of "U" shape and with a pecker on the top. In the upper corner of its two wings, there is a coaxial through hole respectively.
The control lever is inserted between the wings of the trigger. The trigger is fixed on the control lever with axial pin through the holes on the trigger and the one in middle of the lever. The lower part of the handle is fixed to one end of a plate spring piece. The other end of the plate spring is arranged between the wings of the trigger to back-move the trigger when the external force drawing the trigger is gone.
The control lever with trigger is connected to the lever installation base by the means of a axial pin through the hole in the control lever and the one in the installation base, so that the control lever can be swiveled around the axial pin within the range limited by the arrangements in the lever installation base.
As the pecker on the trigger is propped by the dog in the installation base while the control lever is propped by the convex block in the installation base, the control lever can not move either forward or backward. When the trigger is triggered, the control lever can be forwarded for a limited travel.
The valve body includes: a step shaft is in thick, medium and fine sections and has two shaft shoulders. At the end of the fine section there is concave slot.
One pressure sensor is put around the fine section of the step shaft and a clip is put as the limiter around the fine section slot to limit the movement of the pressure sensor.
One spring which is put around the fine section of the step shaft to prop the pressure sensor.
One valve sleeve, containing abovementioned step shaft, pressure sensor, clip and spring. The thick section of the step shaft extends out of the valve sleeve.
The thick section of the step shaft which extends out of the valve sleeve is inserted in the cylindrical concave slot in the installation base and its end is propped by the control lever, extending/returning in the valve sleeve by the movement of the control lever and the spring.
There are 4 holes opened in the valve sleeve. Hole A and hole D are connected to the oil tank of a hydraulic machine; hole B is connected to the oil pump outlet and hole C is connected to the hydraulic cylinder. The corresponding relationship among abovementioned holes' locations and sections of the step shaft is described as below: when the control lever is pressed, thick section of the step shaft blocks hole A and at this time, the pressure sensor blocks hole C.

3. The control valve according to the claim 2, wherein the valve body also can include:
Two valve bodies which are installed parallel to each other, i.e. the upper valve body and the lower valve body.
In the upper valve body, a back-moving spring and a step shaft are arranged. The spring props the top end of the step shaft. The step shaft is of dumbbell shape which has 2 thick section on the top and in the middle. Hole A connects to oil tank, hole C1 and hole C2 connect to the hydraulic cylinder. The corresponding relationship among the holes' locations and the sections of the step shaft is that : when the control lever is not pressed down, the step shaft is propped by the back-moving spring, the thick section on the top end of the step shaft blocks hole C1 while the middle thick section of the step shaft blocks the opening of the valve body. When the step shaft is pressed by the control lever, the middle thick section of the step shaft blocks hole A and the thick section on the top end blocks hole C2.
In the lower valve body, a spring, a limiter and a pressure sensor are arranged. The spring is set in the limiter and props the pressure sensor. When the oil pump does not run, the pressure sensor is propped by the spring to block the outlet B at the end of valve body which connects the oil pump. When the oil pump is running, the pressure sensor is pushed backward by hydraulic oil to reach the limiter.
There are two pipes A and B connecting the upper valve body to the lower valve body. One end of Pipe A locates between hole A and hole C1 in the upper valve body, while the other end locates at end port of the lower valve body. One end of Pipe B locates at hole C2 in the upper valve body and the other end locates at the inner end of the lower valve body and is behind the limiter.

4. The control valve according to the claim 2, wherein the said installation base of the control lever is obtained by holding together two pieces of plates of same sizes and same shape.

5. The control valve according to the claim 2, wherein the said installation base of the control handle is obtained by machining one piece of plate.

6. The control valve according to the claim 2 or 3 , wherein the said control lever is slightly bent for most comfortable hand holding.

7. The control valve according to the claim 2 or 3, wherein in the lower part of the said control lever, there is a through hole, which is vertical to the direction of the through hole in the installation base and being connected with a plate spring .

8. The control valve according to the claim 2 or 3, wherein when the oil pump is running but the control lever is not pressed, the connecting hole to the hydraulic cylinder is blocked but the connecting hole to the oil tank is opened. The connection between the hydraulic cylinder and the oil pump outlet / oil tank is disengaged while the oil pump outlet is connected with the oil tank.

9. The control valve according to the claim 2 or 3, wherein when the oil pump is running and the control lever is pressed, the connecting hole to the hydraulic cylinder is opened but the connecting hole to the oil tank is blocked. The connection between the hydraulic cylinder and the oil pump outlet is engaged while the hydraulic cylinder / oil pump outlet is separated from the oil tank.

10. The control valve according to the claim 2 or 3 , wherein when the oil pump stops running and the control lever is pressed , all the connecting holes between the hydraulic cylinder and the oil tank are blocked. They hydraulic cylinder, the oil pump outlet and the oil tank are all separated from each other.

11. The control valve according to the claim 2 or 3 , wherein when the oil pump stops running and the control lever is not pressed, the connecting holes between the hydraulic cylinder and the oil tank are opened. The hydraulic cylinder communicates with the oil tank.
